# FASCICULE DE BREVET EUROPEEN

(11) **EP 2 925 523 B1**
(45) Date de publication et mention de la délivrance du brevet: **04.01.2017**
(21) Numéro de dépôt: 13803167.9
(22) Date de dépôt: 21.11.2013
(51) Int. Cl.: C08L 27/06

(54) **REVETEMENT DE SOL MULTICOUCHE A BASE DE POLYVINYLBUTYRATE ET DE POLYCHLORURE DE VINYLE**
MEHRSCHICHTIGER FUSSBODEN AUS POLYVINYLBUTYRAT UND POLYVINYLCHLORID
MULTI-LAYER FLOORING MADE OF POLYVINYL BUTYRATE AND POLYVINYL CHLORIDE

(30) Priorité: 28.11.2012 FR 1261331
(43) Date de publication de la demande: 07.10.2015
(73) Titulaire: GERFLOR, 69100 Villeurbanne (FR)
(72) Inventeur: PRÊLE, Martine, F-69170 Tarare (FR); BAR, Sandrine, F-69400 Pouilly Le Monial (FR)
(74) Mandataire: Cabinet Laurent & Charras
(86) Numéro de dépôt international: PCT/FR2013/052810
(87) Numéro de publication internationale: WO 2014/083264

(56) Documents cités:
- WO-A1-99/57196
- US-A- 5 380 794

## Description

### DOMAINE DE L'INVENTION

L'invention concerne un revêtement de sol multicouche comprenant du polyvinylbutyrate, du polychlorure de vinyle, et un agent compatibilisant, le sébaçate de dibutyle.

### ETAT ANTERIEUR DE LA TECHNIQUE

En fonction de la spécificité de l'utilisation à laquelle ils sont destinés, les revêtements de sol synthétiques doivent présenter des propriétés qui peuvent notamment concerner la résistance à l'usure, l'antidérapance, mais également la décoration c'est-à-dire l'aptitude à être coloré.

Les revêtements de sol de l'art antérieur présentent généralement une structure pouvant comprendre plusieurs couches. Ils peuvent notamment être à base de PVC (polychlorure de vinyle).

Bien que le polyvinylbutyrate (PVB) et le polychlorure de vinyle (PVC) soient incompatibles, l'intégration de PVB au sein d'une couche à base de PVC a été décrite dans l'art antérieur. Par exemple, le document WO 99/57196 décrit une composition comprenant du PVB, du PVC, et un agent compatibilisant tel que par exemple les copolymères d'éthylène/acrylate d'alkyle.

US5380794 A décrit un revêtement de sol comprenant une couche d'une composition contenant du PVB, du PVC, et des additifs, et optionnellement une autre couche. PVB peut être ajouté comme agent collant afin de maintenir un bon contact entre la composition chauffée et la surface de l'équipement de traitement.

Toutefois, l'état de la technique ne semble pas comprendre de revêtement de sol multicouche comprenant à la fois du PVB et du PVC et présentant une force d'adhérence satisfaisante entre les différentes couches.

La composition mise au point par le Demandeur permet non seulement d'intégrer les composés incompatibles PVB et PVC au sein d'un revêtement de sol multicouche, mais aussi de résoudre le problème d'adhérence entre une couche supérieure à base de PVC et une couche inférieure à base de PVB et de PVC.

### EXPOSE DE L'INVENTION

Le Demandeur a mis au point un revêtement de sol dont la composition intègre du polyvinylbutyrate (PVB) et du polychlorure de vinyle (PVC), matériaux connus par l'homme du métier pour leur incompatibilité.

En effet, ces différences de propriétés entre ces deux polymères entrainent généralement des problèmes d'adhérence entre couches contenant du PVB et du PVC.

La composition du revêtement de sol objet de l'invention comprend un agent de comptabilisation, le sébaçate de dibutyle (DBS ; numéro CAS : 109-43-3) qui est généralement utilisé en tant que plastifiant du PVB.

Plus précisément l'objet de la présente invention concerne un revêtement de sol multicouche comprenant :
- une couche inférieure contenant, pour 100 parts en poids de polychlorure de vinyle (pcr) :
   * 3 à 80 pcr de polyvinylbutyrate, avantageusement de 15 à 50 pcr ;
   * 100 pcr de polychlorure de vinyle ;
   * 2 à 60 pcr de sébaçate de dibutyle, avantageusement de 4 à 40 pcr ;
   * 1 à 200 pcr d'au moins un additif, avantageusement de 1.5 à 150 pcr ;
- une couche supérieure comprenant au moins du PVC et du sébaçate de dibutyle.

La quantité de constituants est exprimée « pcr » c'est-à-dire en parts en poids pour 100 parts en poids de polychlorure de vinyle. En d'autres termes, une composition comprenant 100 pcr de PVC, 80 pcr de PVB, 120 pcr de DBS et 100 pcr d'additif(s) est une composition comprenant, en poids par rapport au poids de ladite composition :
- 25 % de PVC ;
- 20 % de PVB ;
- 30 % de DBS ;
- 25 % d'additif(s).

De manière avantageuse, il s'agit d'un revêtement bicouche.

Selon un mode de réalisation particulier, la couche supérieure contient :
* 0 à 40 pcr de polyvinylbutyrate, avantageusement de 0 à 20 pcr ;
* 100 pcr de polychlorure de vinyle ;
* 2 à 60 pcr de sébaçate de dibutyle, avantageusement de 4 à 40 pcr ;
* 1 à 100 pcr d'au moins un additif, avantageusement de 1.5 à 60 pcr.

Selon un autre mode de réalisation particulier, les couches inférieure et supérieure du revêtement de sol multicouche pouvant présenter la même composition.

Selon un autre mode de réalisation particulier, la couche supérieure ne comprend pas de PVB.

Selon un autre mode de réalisation, les deux couches comprennent la même quantité de PVB, et/ou de PVC, et/ou de DBS.

En outre, les polymères PVB et PVC peuvent être totalement ou partiellement issus des filières de recyclage respectives. Le PVB est avantageusement intégralement issu du recyclage.

Par exemple le PVB peut être issu du recyclage de fenêtres, ou de vitres de voitures par exemple.

L'incorporation de PVB dans le revêtement de sol multicouche objet de l'invention permet notamment de diminuer la quantité de PVC et peut ainsi offrir une nouvelle option de recyclage du PVB.

Comme le PVB issu du recyclage n'est généralement pas coloré, son intégration au sein d'un revêtement de sol ne perturbe pas la coloration du revêtement de sol ce qui n'est pas le cas du PVC coloré recyclé, les pigments colorant ne pouvant pas être retirés de la composition initiale.

Le PVB issu du recyclage contient généralement du DBS. Il peut également comprendre notamment les composés suivants : triéthylène glycol di-2-ethylhexanoate, dihexyl adipate, tetraéthylène glycol di-2-ethylhexanoate, dibutoxyéthyl adipate, tributyl phosphate, drométrizole, bumétrizole, butylated hydroxytoluène.

Selon un mode de réalisation particulier, la quantité de PVC recyclé contenu dans la couche inférieure ou dans la couche supérieure est comprise entre 0 et 100 % en poids, par rapport au poids total de PVC de ladite couche.

Comme déjà indiqué, la couche inférieure et la couche supérieure peuvent contenir au moins un additif. Il peut notamment s'agir d'un additif choisi dans le groupe comprenant les charges minérales, les pigments, les plastifiants, les stabilisants thermiques, les lubrifiants, les agents de mise en oeuvre (« processing aids »).

Les charges minérales peuvent être choisies dans le groupe comprenant notamment les craies, les kaolins, les sulfates de baryum, les talcs, les trihydrates d'aluminium.

Les plastifiants peuvent être choisis dans le groupe comprenant notamment les orthophtalates de haut poids moléculaires comme le DIDP (di-iso-décyl phtalate), les téréphtalates, les sebaçates, les adipates.

Le plastifiant est avantageusement le DIDP.

En outre, le DBS étant un plastifiant du PVB, la quantité totale de plastifiant compris dans la couche supérieure ou dans la couche inférieure est avantageusement comprise entre 2 et 60 pcr dans ladite couche, plus avantageusement encore entre 4 et 40 pcr.

De manière avantageuse, le revêtement de sol peut présenter une épaisseur comprise entre 0.5 et 3 mm, plus avantageusement encore entre 1.5 et 2.1 mm.

La couche inférieure et la couche supérieure peuvent présenter des épaisseurs différentes. Leurs épaisseurs respectives sont avantageusement comprises entre 0.25 et 1.5 mm.

En ce qui concerne l'adhérence entre la couche inférieure et la couche supérieure, le film bicouche objet de l'invention présente avantageusement une résistance au pelage supérieure à 0.8 N/mm, plus avantageusement supérieure à 1 N/mm, selon la norme EN 431.

Dans la pratique, la couche inférieure du revêtement de sol multicouche est en contact avec le sol sur lequel est placé ledit revêtement de sol.

La présente invention concerne également le procédé de fabrication du revêtement de sol multicouche décrit ci-dessus. Ce procédé comprend les étapes suivantes :
- préparation d'une première composition contenant, pour 100 parts en poids de polychlorure de vinyle (pcr) :
   * 3 à 80 pcr de polyvinylbutyrate, avantageusement de 15 à 50 pcr ;
   * 100 pcr de polychlorure de vinyle ;
   * 2 à 60 pcr de sébaçate de dibutyle, avantageusement de 4 à 40 pcr ;
   * 1 à 200 pcr d'au moins un additif, avantageusement de 1.5 à 150 pcr ;
- préparation d'une deuxième composition comprenant au moins du PVC et du sébaçate de dibutyle ;
- formation d'une couche inférieure à partir de la première composition, avantageusement par calandrage ;
- formation d'une couche supérieure à partir de la deuxième composition, avantageusement par calandrage
- association de la couche inférieure et de la couche supérieure de manière à former le revêtement de sol multicouche.

Selon un mode de réalisation particulier, la deuxième composition contient, pour 100 parts en poids de polychlorure de vinyle (pcr) :
* 0 à 40 pcr de polyvinylbutyrate, avantageusement de 0 à 20 pcr ;
* 100 pcr de polychlorure de vinyle ;
* 2 à 60 pcr de sébaçate de dibutyle, avantageusement de 4 à 40 pcr ;
* 1 à 100 pcr d'au moins un additif, avantageusement de 1.5 à 60 pcr.

La préparation des compositions peut comprendre des étapes d'homogénéisation et de malaxage selon les techniques faisant partie des connaissances de l'homme du métier.

La formation des couches inférieure et supérieure peut être réalisée à une température avantageusement comprise entre 150 et 180 °C, plus avantageusement de l'ordre de 160°C.

L'association des couches inférieure et supérieure est avantageusement réalisée par passage entre deux rouleaux chauffants. Cette étape est avantageusement mise en oeuvre à une température comprise entre 150 et 180 °C, plus avantageusement de l'ordre de 160°C.

L'invention et les avantages qui en découlent ressortiront mieux des exemples suivants donnés afin d'illustrer l'invention et non de manière limitative.

### EXEMPLES DE REALISATION DE L'INVENTION

Plusieurs revêtements de sol multicouches ont été préparés selon le mode opératoire suivant :
Calandrage sur malaxeur COLLIN :
   - T = 170-168 °C pour les feuilles à base de PVC
   - T = 168-165°C pour les feuilles à base de PVC/PVB
   - Réglage de l'épaisseur : 0.70mm affichée
Doublage à la presse LESCUYER
   - Température affichée = 180°C et P=80bars
   - 5 mn en pression à chaud
   - 5 mn en pression en refroidissement
   - Plaque de grain CALF

Les tests de résistance au pelage ont été réalisés sur dynamomètre LLOYD selon la norme EN 431.

Critères d'acceptation :
- Résistance pelage en N/mm < 0.80 : non conforme
- 0.80 < Résistance pelage en N/mm < 1.00 : acceptable
- 1 < Résistance pelage en N/mm : conforme

Les compositions suivantes ont été utilisées afin de préparer les revêtements de sols multicouches INV-1 à INV-4 selon l'invention et CE-5 et CE-6 selon l'art antérieur (tableau 3).

**Tableau 1 : Compositions des couches supérieures à base de PVC**

| **couche supérieure** | ***PVC-1*** | ***PVC-2*** | ***PVC-3*** | ***PVC-4*** | ***PVC-5*** | ***PVC-6*** |
|---|---|---|---|---|---|---|
| PVC ^{(a)} | 50 | 50 | 50 | 50 | 50 | 50 |
| PVC ^{(b)} | 50 | 50 | 50 | 50 | 50 | 50 |
| DIDP ^{(c)} | 27 | 30 | 36 | 24 | 40 | |
| DBS ^{(d)} | 13 | 10 | 4 | 12 | | 32 |
| Stabilisant thermique | 1.5 | 1.5 | 1.5 | 1.5 | 1.5 | 1.5 |
| CaCO₃ | | | | 50 | 50 | |

| | | | | | | |
|---|---|---|---|---|---|---|
| ^{(a)} PVC obtenu chez Arkema ^{(b)} PVC obtenu chez Solvay ^{(c)} DIDP : numéro CAS : 26761-40-0 ^{(d)} DBS : numéro CAS : 109-43-3 | | | | | | |

Les compositions sont exprimées en pcr

**Tableau 2 : Compositions des couches inférieures à base de PVC/PVB**

| **couche inférieure** | ***PVB***-***1*** | ***PVB***-***2*** | ***PVB***-***3*** | ***PVB***-***4*** | ***PVB***-***5*** | ***PVB***-***6*** | ***PVB***-***7*** |
|---|---|---|---|---|---|---|---|
| PVC ^{(a)} | 50 | 50 | 50 | 50 | 50 | 50 | 50 |
| PVC ^{(b)} | 50 | 50 | 50 | 50 | 50 | 50 | 50 |
| DIDP ^{(c)} | 27 | 30 | 36 | 24 | 40 | | |
| DBS ^{(d)} | 13 | 10 | 4 | 12 | | 32 | 32 |
| Stabilisant thermique | 1.5 | 1.5 | 1.5 | 1.5 | 1.5 | 1.5 | 1.5 |
| CaCO₃ | 50 | 50 | 50 | 50 | 50 | 50 | |
| PVB recyclé | 34 | 34 | 34 | 33 | 34 | 32 | 24 |
| Lubrifiant | 0.2 | 0.2 | 0.2 | 0.2 | 0.2 | 0.2 | 0.2 |

| | | | | | | | |
|---|---|---|---|---|---|---|---|
| ^{(a)} PVC obtenu chez Arkema ^{(b)} PVC obtenu chez Solvay ^{(c)} DIDP numéro CAS : 26761-40-0 ^{(d)} DBS : numéro CAS : 109-43-3 | | | | | | | |

Les compositions sont exprimées en pcr

**Tableau 3 : Caractéristiques des revêtements de sol bicouches selon l'invention (INV-1 à INV-4) et selon l'art antérieur (CE-5 et CE-6)**

| exemples | épaisseur (mm) | couche supérieure | couche inférieure | résistance au pelage (N/m) | conformité |
|---|---|---|---|---|---|
| INV-1 | 1.5-1.6 | *PVC-1* | *PVB-1* | 1.01 +/- 0.09 | OUI |
| INV-2 | 1.6-1.7 | *PVC-2* | *PVB-2* | 1.08 +/- 0.16 | OUI |
| INV-3 | 1.6-1.7 | *PVC-3* | *PVB-3* | 1.13+/-0.2 | OUI |
| INV-4 | 1.5-1.6 | *PVC-4* | *PVB-4* | 1.21 | OUI |
| INV-5 | 1.7-1.8 | *PVC-6* | *PVB-7* | 1.40 | OUI |
| CE-5 | 1.7-1.8 | *PVC-5* | *PVB-5* | 0.66 | NON |
| CE-6 | 1.7-1.8 | *PVC-5* | *PVB-6* | 0.62 | NON |

Le tableau 3 montre que les revêtements de sol bicouches de l'invention présentent une meilleure résistance au pelage que les revêtements de sol ne comprenant pas de DBS dans la couche supérieure (CE-6) ou dans les deux couches (CE-5).

## Revendications

1. Revêtement de sol multicouche comprenant :
- une couche inférieure contenant, pour 100 parts en poids de polychlorure de vinyle (pcr) :
* 3 à 80 pcr de polyvinylbutyrate ;
* 100 pcr de polychlorure de vinyle ;
* 2 à 60 pcr de sébaçate de dibutyle ;
* 1 à 200 pcr d'au moins un additif ;
- une couche supérieure comprenant au moins du PVC et du sébaçate de dibutyle.

2. Revêtement de sol multicouche selon la revendication 1, ***caractérisé* en ce que** la couche supérieure contient, pour 100 parts en poids de polychlorure de vinyle (pcr) :
* 0 à 40 pcr de polyvinylbutyrate ;
* 100 pcr de polychlorure de vinyle ;
* 2 à 60 pcr de sébaçate de dibutyle ;
* 1 à 100 pcr d'au moins un additif

3. Revêtement de sol multicouche selon la revendication 2, ***caractérisé* en ce que** la couche supérieure comprend :
* 0 pcr de polyvinylbutyrate ;
* 100 pcr de polychlorure de vinyle ;
* 2 à 60 pcr de sébaçate de dibutyle ;
* 1 à 100 pcr d'au moins un additif

4. Revêtement de sol selon l'une des revendications 1 à 3, ***caractérisé* en ce que** le polyvinylbutyrate est du polyvinylbutyrate recyclé.

5. Revêtement de sol multicouche selon l'une des revendications 1 à 4, ***caractérisé* en ce que** le polychlorure de vinyle est du polychlorure de vinyle recyclé.

6. Revêtement de sol multicouche selon l'une des revendications 1 à 5, ***caractérisé* en ce que** le au moins un additif est choisi dans le groupe comprenant les charges minérales, les pigments, les plastifiants, les stabilisants thermiques, les lubrifiants, les agents de mise en oeuvre.

7. Revêtement de sol multicouche selon l'une des revendications 1 à 6, ***caractérisé* en ce que** le au moins un additif est le DIDP.

8. Revêtement de sol bicouche selon l'une des revendications 1 à 7, ***caractérisé* en ce qu'**il présente une épaisseur comprise entre 0.5 et 3 mm.

9. Revêtement de sol multicouche selon l'une des revendications 1 à 7, ***caractérisé* en ce qu'**il présente une épaisseur comprise entre 0.5 et 3 mm.

10. Revêtement de sol multicouche selon la revendication 1, ***caractérisé* en ce que** la couche inférieure contient, pour 100 parts en poids de polychlorure de vinyle (pcr) :
* 15 à 50 pcr de polyvinylbutyrate ;
* 100 pcr de polychlorure de vinyle ;
* 4 à 40 pcr de sébaçate de dibutyle ;
* 1.5 à 150 pcr d'au moins un additif.

11. Revêtement de sol multicouche selon la revendication 1, ***caractérisé* en ce que** la couche supérieure contient, pour 100 parts en poids de polychlorure de vinyle (pcr) :
* 0 à 20 pcr de polyvinylbutyrate ;
* 100 pcr de polychlorure de vinyle ;
* 4 à 40 pcr de sébaçate de dibutyle ;
* 1.5 à 60 pcr d'au moins un additif.

12. Procédé de fabrication du revêtement de sol multicouche objet de l'une des revendications 1 à 11, ***caractérisé* en ce qu'**il comprend les étapes suivantes :
- préparation d'une première composition contenant, pour 100 parts en poids de polychlorure de vinyle (pcr) :
* 3 à 80 pcr de polyvinylbutyrate ;
* 100 pcr de polychlorure de vinyle ;
* 2 à 60 pcr de sébaçate de dibutyle ;
* 1 à 200 pcr d'au moins un additif ;
- préparation d'une deuxième composition comprenant au moins du PVC et du sébaçate de dibutyle ;
- formation d'une couche inférieure à partir de la première composition ;
- formation d'une couche supérieure à partir de la deuxième composition ;
- association de la couche inférieure et de la couche supérieure de manière à former le revêtement de sol multicouche.

13. Procédé de fabrication selon la revendication 12, ***caractérisé* en ce que** l'association des couches inférieure et supérieure est réalisée par passage entre deux rouleaux chauffants.

14. Procédé de fabrication selon la revendication 12, ***caractérisé* en ce que** l'association de la couche inférieure et de la couche supérieure est réalisée à une température comprise entre 150 et 180°C.

15. Procédé de fabrication selon la revendication 12, ***caractérisé* en ce que** la deuxième composition contient, pour 100 parts en poids de polychlorure de vinyle (pcr) :
* 0 à 40 pcr de polyvinylbutyrate ;
* 100 pcr de polychlorure de vinyle ;
* 2 à 60 pcr de sébaçate de dibutyle ;
* 1 à 100 pcr d'au moins un additif.

## Patentansprüche

1. Mehrschichtiger Bodenbelag, bestehend aus:
- einer unteren Schicht, die für 100 Gewichtsanteile Polyvinylchlorid (Gew.-%) enthält:
* 3 bis 80 Gew.-% Polyvinylbutyrat;
* 100 Gew.-% Polyvinylchlorid;
* 2 bis 60 Gew.-% Dibutylsebacat;
* 1 bis 200 Gew.-% mindestens eines Zusatzstoffes;
- einer oberen Schicht, die mindestens PVC und Dibutylsebacat enthält.

2. Mehrschichtiger Bodenbelag nach Anspruch 1, **dadurch gekennzeichnet, dass** die obere Schicht für 100 Gewichtsanteile Polyvinylchlorid (Gew.-%) enthält:
* 0 bis 40 Gew.-% Polyvinylbutyrat;
* 100 Gew.-% Polyvinylchlorid;
* 2 bis 60 Gew.-% Dibutylsebacat;
* 1 bis 100 Gew.-% mindestens eines Zusatzstoffes.

3. Mehrschichtiger Bodenbelag nach Anspruch 2, **dadurch gekennzeichnet, dass** die obere Schicht enthält:
* 0 Gew.-% Polyvinylbutyrat;
* 100 Gew.-% Polyvinylchlorid;
* 2 bis 60 Gew.-% Dibutylsebacat;
* 1 bis 100 Gew.-% mindestens eines Zusatzstoffes.

4. Bodenbelag nach einem der Ansprüche 1 bis 3, **dadurch gekennzeichnet, dass** es sich bei dem Polyvinylbutyrat um recyceltes Polyvinylbutyrat handelt.

5. Mehrschichtiger Bodenbelag nach einem der Ansprüche 1 bis 4, **dadurch gekennzeichnet, dass** es sich bei dem Polyvinylchlorid um recyceltes Polyvinylchlorid handelt.

6. Mehrschichtiger Bodenbelag nach einem der Ansprüche 1 bis 5, **dadurch gekennzeichnet, dass** der mindestens eine Zusatzstoff aus der Gruppe stammt, die aus mineralischen Füllstoffen, Pigmenten, Weichmachern, Wärmestabilisatoren, Schmiermitteln, Verarbeitungshilfsstoffen besteht.

7. Mehrschichtiger Bodenbelag nach einem der Ansprüche 1 bis 6, **dadurch gekennzeichnet, dass** es sich bei dem mindestens einen Zusatzstoff um DIDP handelt.

8. Zweischichtiger Bodenbelag nach einem der Ansprüche 1 bis 7, **dadurch gekennzeichnet, dass** der Bodenbelag 0,5 bis 3 mm dick ist.

9. Mehrschichtiger Bodenbelag nach einem der Ansprüche 1 bis 7, **dadurch gekennzeichnet, dass** der Bodenbelag 0,5 bis 3 mm dick ist.

10. Mehrschichtiger Bodenbelag nach Anspruch 1, **dadurch gekennzeichnet, dass** die untere Schicht für 100 Gewichtsanteile Polyvinylchlorid (Gew.-%) enthält:
* 15 bis 50 Gew.-% Polyvinylbutyrat;
* 100 Gew.-% Polyvinylchlorid;
* 4 bis 40 Gew.-% Dibutylsebacat;
* 1,5 bis 150 Gew.-% mindestens eines Zusatzstoffes.

11. Mehrschichtiger Bodenbelag nach Anspruch 1, **dadurch gekennzeichnet, dass** die obere Schicht für 100 Gewichtsanteile Polyvinylchlorid (Gew.-%) enthält:
* 0 bis 20 Gew.-% Polyvinylbutyrat;
* 100 Gew.-% Polyvinylchlorid;
* 4 bis 40 Gew.-% Dibutylsebacat;
* 1,5 bis 60 Gew.-% mindestens eines Zusatzstoffes.

12. Verfahren zur Herstellung des mehrschichtigen Bodenbelags, der aus einem der Ansprüche 1 bis 11 hervorgeht, **dadurch gekennzeichnet, dass** das Verfahren folgende Arbeitsschritte umfasst:
- Vorbereitung einer ersten Zusammensetzung, die für 100 Gewichtsanteile Polyvinylchlorid (Gew.-%) enthält:
* 3 bis 80 Gew.-% Polyvinylbutyrat;
* 100 Gew.-% Polyvinylchlorid;
* 2 bis 60 Gew.-% Dibutylsebacat;
* 1 bis 200 Gew.-% mindestens eines Zusatzstoffes;
- Vorbereitung einer zweiten Zusammensetzung, die mindestens PVC und Dibutylsebacat enthält;
- Herstellung einer unteren Schicht aus der ersten Zusammensetzung;
- Herstellung einer oberen Schicht aus der zweiten Zusammensetzung;
- Zusammenfügung der unteren Schicht und der oberen Schicht zur Ausbildung des mehrschichtigen Bodenbelags.

13. Herstellungsverfahren gemäß Anspruch 12, **dadurch gekennzeichnet, dass** das Zusammenfügen der unteren und oberen Schicht durch einen Durchlauf zwischen zwei Heißwalzen erfolgt.

14. Herstellungsverfahren nach Anspruch 12, **dadurch gekennzeichnet, dass** das Zusammenfügen der unteren Schicht und der oberen Schicht bei einer Temperatur zwischen 150 und 180°C erfolgt.

15. Herstellungsverfahren nach Anspruch 12, **dadurch gekennzeichnet, dass** die zweite Zusammensetzung für 100 Gewichtsanteile Polyvinylchlorid (Gew.-%) enthält:
* 0 bis 40 Gew.-% Polyvinylbutyrat;
* 100 Gew.-% Polyvinylchlorid;
* 2 bis 60 Gew.-% Dibutylsebacat;
* 1 bis 100 Gew.-% mindestens eines Zusatzstoffes.

## Claims

1. Multilayer floor covering comprising:
- a bottom layer containing, per 100 parts by weight of polyvinyl chloride (phr):
3 phr to 80 phr of polyvinyl butyrate;
100 phr of polyvinyl chloride (PVC);
2 phr to 60 phr of dibutyl sebacate; and
1 phr to 200 phr of at least one additive; and
- a top layer comprising at least PVC and dibutyl sebacate.

2. Multilayer floor covering according to claim 1, **characterized in that** the top layer contains, per 100 parts by weight of polyvinyl chloride (phr):
0 phr to 40 phr of polyvinyl butyrate;
100 phr of polyvinyl chloride;
2 phr to 60 phr of dibutyl sebacate; and
1 phr to 100 phr of at least one additive.

3. Multilayer floor covering according to claim 2, **characterized in that** the top layer comprises:
0 phr of polyvinyl butyrate;
100 phr of polyvinyl chloride;
2 phr to 60 phr of dibutyl sebacate; and
1 phr to 100 phr of at least one additive.

4. Floor covering according to any one of claims 1 to 3, **characterized in that** the polyvinyl butyrate is recycled polyvinyl butyrate.

5. Multilayer floor covering according to any one of claims 1 to 4, **characterized in that** the polyvinyl chloride is recycled polyvinyl chloride.

6. Multilayer floor covering according to any one of claims 1 to 5, **characterized in that** the at least one additive is chosen from among the group comprising mineral fillers, pigments, plasticizers, thermal stabilizers, lubricants, and processing agents.

7. Multilayer floor covering according to any one of claims 1 to 6, **characterized in that** the at least one additive is DIDP.

8. Two-layer floor covering according to any one of claims 1 to 7, **characterized in that** it has a thickness lying in the range 0.5 mm to 3 mm.

9. Multi-layer floor covering according to any one of claims 1 to 7, **characterized in that** it has a thickness lying in the range 0.5 mm to 3 mm.

10. Multilayer floor covering according to claim 1, **characterized in that** the bottom layer contains, per 100 parts by weight of polyvinyl chloride (phr):
15 phr to 50 phr of polyvinyl butyrate;
100 phr of polyvinyl chloride;
4 phr to 40 phr of dibutyl sebacate; and
1.5 phr to 150 phr of at least one additive.

11. Multilayer floor covering according to claim 1, **characterized in that** the top layer contains, per 100 parts by weight of polyvinyl chloride (phr):
0 phr to 20 phr of polyvinyl butyrate;
100 phr of polyvinyl chloride;
4 phr to 40 phr of dibutyl sebacate; and
1.5 phr to 60 phr of at least one additive.

12. Manufacturing method for manufacturing a multilayer floor covering according to any one of claims 1 to 11, said method being **characterized in that** it comprises the following steps:
- preparing a first composition containing, per 100 parts by weight of polyvinyl chloride (phr):
3 phr to 80 phr of polyvinyl butyrate;
100 phr of polyvinyl chloride;
2 phr to 60 phr of dibutyl sebacate; and
1 phr to 200 phr of at least one additive;
- preparing a second composition comprising at least PVC and dibutyl sebacate;
- forming a bottom layer using the first composition;
- forming a top layer using the second composition; and
- associating the bottom layer and the top layer in such a manner as to form the multilayer floor covering.

13. Manufacturing method according to claim 12, **characterized in that** associating the bottom and top layers is performed by passing them between two hot rollers.

14. Manufacturing method according to claim 12, **characterized in that** associating the bottom layer and the top layer is performed at a temperature lying in the range 150°C to 180°C.

15. Manufacturing method according to claim 12, **characterized in that** the second composition contains, per 100 parts by weight of polyvinyl chloride (phr):
0 phr to 40 phr of polyvinyl butyrate;
100 phr of polyvinyl chloride;
2 phr to 60 phr of dibutyl sebacate;
1 phr to 100 phr of at least one additive.
